(19) Europäisches Patentamt
European Patent Office
Office européen des brevets

(11) **EP 2 338 755 B1**

(12) **EUROPEAN PATENT SPECIFICATION**

(45) Date of publication and mention
of the grant of the patent:
**19.02.2014 Bulletin 2014/08**

(51) Int Cl.:
***B60T 15/48*** *(2006.01)*     ***B60T 17/00*** *(2006.01)*
***B60T 17/02*** *(2006.01)*

(21) Application number: **09425537.9**

(22) Date of filing: **24.12.2009**

(54) **Device and method for handling the regeneration of a drying device of a pneumatic braking system, in particular for industrial vehicles**

Vorrichtung und Verfahren zur Steuerung der Regenerierung der Trocknereinheit eines pneumatischen Bremssystems, insbesondere für Lastkraftwagen

Dispositif et procédé pour la gestion de la régénération d'un sécheur d'air d'un système de freinage pneumatique, en particulier pour des véhicules utilitaires

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(43) Date of publication of application:
**29.06.2011 Bulletin 2011/26**

(73) Proprietor: **Iveco S.p.A.**
**10156 Torino (IT)**

(72) Inventors:
• **Prina, Claudio**
**13900 Biella (IT)**
• **Gennari, Paolo**
**10137 Torino (IT)**
• **Bezze, Massimo**
**10080 S.Benigno Canavese (IT)**
• **Cassola, Riccardo**
**15048 Valenza (IT)**

(74) Representative: **Borsano, Corrado et al**
**Notarbartolo & Gervasi S.p.A.**
**Corso di Porta Vittoria, 9**
**20122 Milano (IT)**

(56) References cited:
**WO-A1-2009/010199     DE-A1- 4 141 696**
**DE-A1- 19 515 895**

**Description**

DESCRIPTION

<u>Field of application of the invention</u>

The present invention relates to the field of devices and methods for handling the regeneration of drying devices of pneumatic braking systems, in particular for industrial vehicles comprising an at least partially pneumatic braking system.

<u>State of the art</u>

Industrial vehicles are provided with a pneumatic braking system. This results in the air being kept pressurized in the braking system as long as the vehicle braking occurs, when the air is ejected. In order to restore the pressure level prior to braking, compressed air is accumulated in an appropriate tank.

On one hand, filling the tanks is critical when brake use is particularly frequent. On the other hand, the air stored in the tank, and thus in the braking system, is to be deprived from the condensation which is formed therein to avoid the braking system performance from deteriorating. For this reason, a drying device is provided, which dehumidifies the compressed air in the braking system.

When a vehicle with at least partially pneumatic braking system copes with a road which requires intensive brake use, the compressed air production system could not succeed in supplying the compressed air needed for the correct operation of the braking system, because the current pressure of the compressed air is generally restored only when a predetermined minimum pressure is reached.

In order to overcome such a problem, the prior art empirically estimates a braking time and, in relation to the size of the compressed air accumulation tank, determines said minimum pressure value which determines the activation of the tank recharging compressor.

The above-mentioned problem is particularly critical when, in addition to a prolonged braking sequence, the drying cartridge is to be regenerated, employing further compressed air accumulated in the tank. Furthermore, the regeneration procedure implies the activation of the compressor, which subtracts driving torque and which, under certain conditions, may determine a deterioration of the vehicle performance.

A system, further acquiring information related to a road to be travelled, is known from WO2009/010199 A1.

<u>Summary of the invention</u>

It is thus the object of the present invention to overcome all the above drawbacks and to indicate a method of handling the regeneration of a drying device of a pneumatic braking system, in particular for industrial vehicles.

It is the object of the present invention a method of handling the regeneration of a drying device of a pneumatic braking system, in particular for industrial vehicles, in accordance with claim 1.

It is a particular object of the present invention a method of handling the regeneration of a drying device of a pneumatic braking system, in particular for industrial vehicles, as described in greater detail in the dependent claims, which form an integral part of the present invention.

It is a further object of the present invention a device for handling the regeneration of a drying device of a pneumatic braking system, comprising means for carrying out the aforesaid method and means for receiving the information needed for carrying out the aforesaid method.

The described method, also in relation to its variants, advantageously allows to handle the regeneration of the compressor not only in relation to the humidity reached in the drying cartridge, but also in relation to the current air pressure in the compressed air tank, in addition to the expected use of the air itself, thus allowing to fractionate a regeneration procedure into fractions defined by appropriate humidity thresholds, thus avoiding both functionality of the braking system and vehicle performance in terms of driving torque from being compromised.

<u>Brief description of the drawings</u>

Further objects and advantages of the present invention will be apparent from the following detailed description of an embodiment thereof (and variants thereof) and from the accompanying drawings given merely by way of non-limitative example, in which:

figure 1 shows a flow chart defining an example of method in accordance with the present invention,
figure 2 shows a further method either parallel or alternative to the previous method described in figure 1,

figure 3 shows a flow chart of an event handling of the pneumatic system compressor,

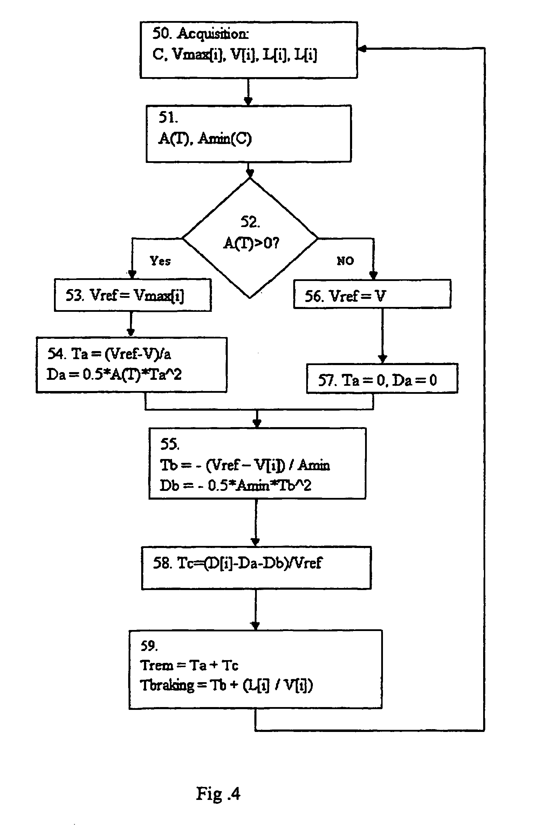

figure 4 shows a flow chart for assisting the calculation of a vehicle braking time, for a speed variation determined by road conditions, and for assisting the calculation of a remaining time before the vehicle starts braking,
figure 5 shows a psychometric chart.

The same reference numbers and letters in the figures refer to the same elements or components.

<u>Detailed description of embodiments</u>

The control system object of the present invention comprises an electric control unit working during the so-called "auto-routing" on a three-dimensional digital map, already available, and during the navigation along a set route to reach a destination.

The mainly used locating parameters are latitude, longitude, absolute altitude above sea level and variations of altitude along the route.

While the vehicle is running, the control system object of the invention, by interacting with onboard navigation systems, estimates the features of an as-long-as-possible section of the route that the vehicle is about to travel.

The control system object of the invention receives information on road conditions from the navigation system and from a possible radio receiver and thus implements

the method comprising the following steps:

-   acquiring information related to a route to be travelled,
-   calculating a braking system use time Tbraking on a length of said route in relation to said information,
-   when the current pressure Pa of the compressed air contained in the accumulation tank is insufficient with regards to said braking system use time Tbraking, then
-   activating the compressor so as to make said current pressure Pa reach a target pressure Pt higher than the current pressure sufficient for coping with said use time.

In the present description, Tbraking time and Trem time means Tbraking time range and Trem time range.

Said information may be:

-   variation of length, slope, inclination and bending of a road section,
-   variation of road type: urban/extra-urban/highway with particular reference to:

    o possible changes of direction,
    o signage, with particular reference to warning signs, signs giving orders, yield signs, prohibition signs and horizontal signage,
    o presence of traffic lights, crossroads, crossings of various nature (pedestrian/rail/cycle lane crossings),

-   traffic information, road conditions, weather information.

In general, all information which may determine a vehicle speed variation is useful.

Information on traffic and road conditions may be made available in various manners, i.e. via DAB (Digital Audio Broadcasting) or via a data/telephone connection such as GPRS, HSDPA, etc.

Weather information may be obtained via DAB or GPRS/HSDPA, or by means of onboard instruments.

Said control unit, as will be described in detail below, may be advantageously connected to the vehicle control unit(s) governing vehicle functions, such as for example the gearbox, particularly if automatic or robotized, the engine, the brakes comprising, for example, the ABS or EBS system, the hydraulic retarder, the stability control (ESP), the direction indicators, etc.

According to a first aspect of the invention, the inhibition of the compressor activation is appropriate when the vehicle needs to cope with an uphill slope to avoid subtracting driving torque from vehicle movement. While it is worth making the most of a downhill slope for recharging the compressed air tank even when the air tank pressure is not critically low.

Therefore, with respect to the known systems, the compressor is controlled, i.e. the procedure of recharging the tank is handled, both in relation to predetermined maximum Pmax and minimum Pmin thresholds, but also in relation to a higher or lower compressor activation opportunity, e.g. in relation to the driving torque required by the engine for moving the vehicle.

According to a further aspect of the present invention, said control unit estimates the intensity of one or more next braking events of the vehicle, and thus the amount of air needed to travel a certain road section of a route. Said braking intensity is preferably estimated in terms of braking time Tbraking.

Furthermore, said control unit calculates the remaining time from the instant of calculation before the driver starts braking. Calculating the remaining time Trem before the braking starts is advantageously useful for taking the latency time for preparing the recharging of the compressed air tank into account, which may vary from 10 to 20 seconds, according to the type of compressor used.

According to a preferred control method, said control unit takes into account the lower/higher opportunity of recharging the tank, and the amount of air needed to cope with one or more next braking events. In order to store an amount of air needed to handle said braking event(s), the recharge control preferably has a higher priority with respect to evaluating the higher/lower opportunity for activating the compressor.

In other terms, if the stored air is estimated to be insufficient to cope with the next braking events, then the compressor is started even if the vehicle is uphill or accelerating.

Said amount of air needed to cope with one or more next braking events may be advantageously expressed in terms of pressure in the compressed air accumulation tank.

Furthermore, said control unit controls the activation of the compressor considering the sections, included in said route, in which recharging the compressed air tank is most advantageous and those in which recharging the compressed air tank is least advantageous.

Therefore, the control unit controls the compressor in relation to the following physical magnitudes:

- current pressure Pa inside the tank compared with Pmax and Pmin,
- Tbraking/Trem,

and possibly, subordinately to the previous magnitudes, the control unit controls the compressor in relation to an estimated higher/lower opportunity to activate the compressor in relation to the driving torque required by the engine for moving the vehicle.

According to a preferred embodiment of the invention, for example, by means of a look-up table, compressor activation may be fractioned so as to prevent vehicle performance from deteriorating, while ensuring a sufficient amount of stored air to cope with the braking events determined by the travelled route.

According to another point of view, controlling the compressor according to said magnitudes may equivalently correspond to controlling the starting/stopping of the compressor by means of several functions/procedures executable in parallel, preferably reciprocally in OR and in AND providing that the current pressure Pa does not exceed the maximum allowable pressure Pmax (Pa<Pmax) and is not lower than the minimum allowable pressure Pmin (Pa>Pmin).

According to a preferred variant of the invention, said control unit may work by event, i.e. by activating procedures, also in parallel, when:

- a traffic condition variation occurs,
- a road conformation variation occurs,
- a crossroad, traffic light, level crossing is approaching, etc.,
- saturation of the drying cartridge of the dryer is approaching.

According to both variants, also when the braking event does not imply a particularly intensive use of the braking system, activating the compressor may be advantageous in all cases, because the road section travelled by the vehicle is downhill or flat, for example, and therefore the engine is not required to deliver a particularly high driving torque.

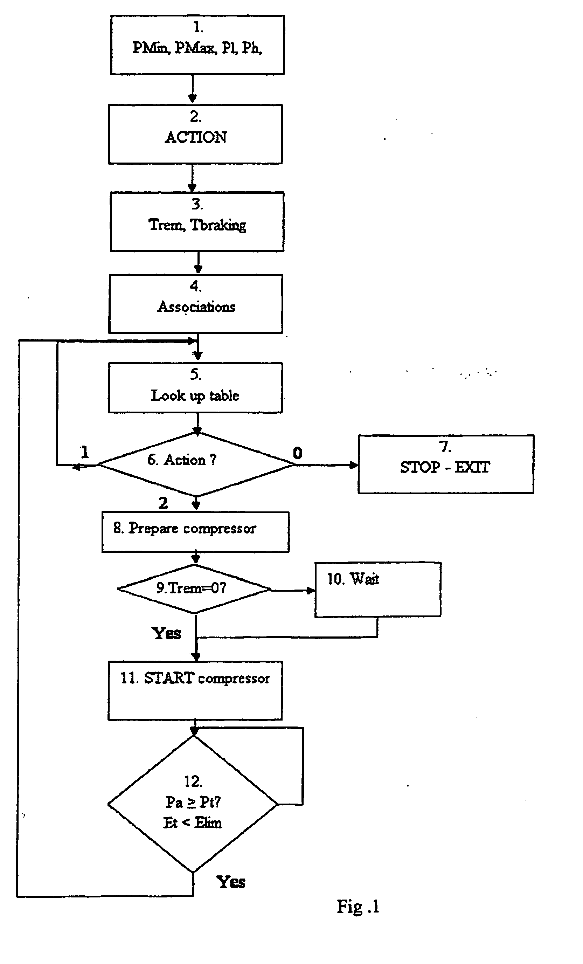

A first compressor control handling process is based on respecting Pmax/Pmin and on calculating Tbraking (braking time estimation) and Trem (remaining time before starting braking) and comprises the following steps, according to the flow chart shown in figure 1 and table 1 shown below which defines a look-up table:

Table 1

| Pa (Air pressure) | Action | Pt (target pressure) | Start |
|---|---|---|---|
| Pa>Pmax | Stop compressor | - | - |
| Ph<Pa<Pmax | No action | - | - |
| Pl<Pa<Ph | Start compressor | Pmax | Trem |
| Pmin<Pa<Pl | Start compressor | >Ph | Trem |
| Pa<Pmin | Start compressor | Ph | ASAP |

- at step 1, defining pressure thresholds and corresponding delimited ranges, e.g.:

  - ■ Pmax: maximum pressure: 12.5 bars
  - ■ Ph: high pressure (< Pmax): 11.0 bars
  - ■ Pl: low pressure (< Ph): 10.0 bars
  - ■ Pmin: minimum pressure: 9.5 bars

- at step 2, associating numeric values to compressor control actions:

  0 = Stop compressor,
  1 = Do not start compressor,
  2 = Start compressor,

one of said values being associated with an ACTION parameter, each time;

- at step 3, calculating said Trem and said Tbraking (which may take real value from 0 to + ∞),
- at step 4, for each pressure range defined by said pressure thresholds, associating a value 0,1,2 to said ACTION parameter, and a target pressure Pt (P Target) to be reached and a Trem value,
- at step 5, measuring Pa and according to table 1, calculating said target pressure Pt, said parameter defining said action to be performed (ACTION) and Trem,
- at step 6, in relation to the current pressure, said ACTION parameter, said target pressure and said Trem vary (e.g. according to Table 1), thus if ACTION=0, because Pa>Pmax, then going to step 7, i.e. stopping the compressor and stopping the cycle, if ACTION=1, i.e. Ph<Pa<Pmax then going back to step 5 without starting the compressor, if ACTION=2, i.e. Pa<Ph then, at step 8, controlling the preparation of the compressor and going to
- step 9 for checking Trem, in particular if Trem is zero going straight to step 11, in which starting the compressor is contemplated, otherwise going to step 10 and introducing a delay before starting the compressor,
- once the compressor has been started, at step 12, checking that the current pressure Pa is either higher than or equal to the target pressure associated with the range in which the current pressure is located (Pa≥Pt), then until said pressure is reached continuing to recharge (step 12); when, instead, Pa exceeds said target pressure, going back to step 5 and possibly either keeping the compressor running or stopping it.

According to a preferred variant of the method, at step 12, further checking whether the torque required by the engine Et is lower than a torque limit threshold Elim, in such a case the compressor is stopped before going back to step 5.

Preferably, said delay introduced at step 10 before starting the compressor may be such to delay the start-up of the compressor until the braking start instant or until the required driving torque Et is lower than said torque limit threshold (Et<Elim).

Said torque condition Et<Elim is preferably considered only when a gear is engaged, so as to prevent the compressor from being caused to start during gear shifts, in which the torque required by the engine is limited.

Or said delay is preferably set to zero, also when Et>Elim if the estimated Tbraking is not compatible with Pa, i.e. when the air in the compressor is not sufficient to ensure a pressure Pa>Pmin at the end of the next braking events.

According to said table 1, at step 5, pressure Pa is measured and when Pa<Pmin, the control action is "start compressor" and the target pressure Pt is equal to Ph and Trem is a real number equal to zero; when the current pressure Pa is between Pmin and Pl, the control action is "start compressor" and the target pressure Pt is higher than Ph and is a real number greater than zero; when the current pressure Pa is between Pl and Ph, the control action is "start compressor" and the target pressure Pt is equal to Pmax, and Trem is a real number greater than zero; when the current pressure Pa is between Ph and Pmax, compressor start-up is inhibited and Pt and Trem are infinite or meaningless; finally, when Pa>Pmax, the compressor is forced to stop. According to table 1, recharging of the compressed air tank is advantageously fractioned, whereby it may be partial until a target humidity Pt is reached, which depends on pressure range in which the current pressure Pa is comprised.

According to the described variant, the cycle is stopped at step 7. Therefore, the process of recharging the compressor based on Tbraking/Trem may be advantageously started by an event handler, or at step 7 once the compressor has been stopped, the method may be expected to resume from step 4 to update Trem.

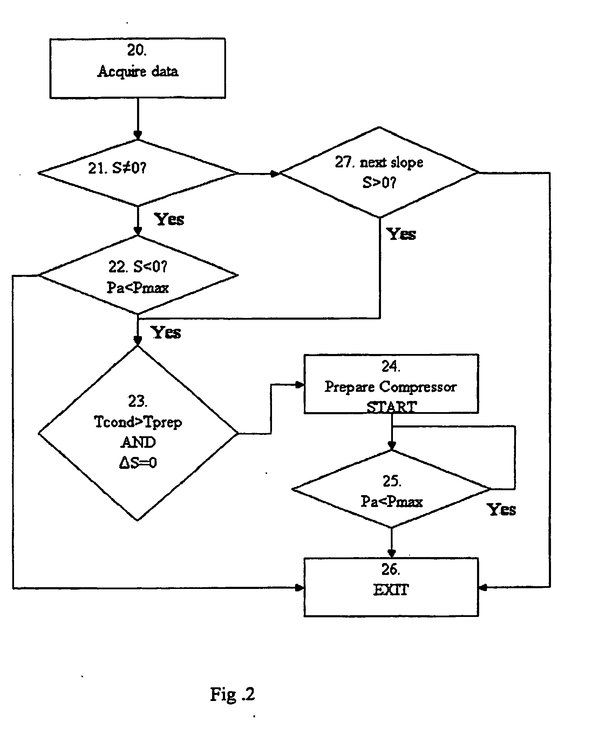

In parallel, the control unit may control the activation of the compressor according to a second compressor handling process in accordance with the chart in figure 2, in order to take the higher/lower opportunity of starting up the compressor into account, also when said first process contemplates that starting the compressor is not necessary.

Said second process may be preferably started when an event occurs, i.e. when a speed variation is expected in relation to the road features, then

- at step 20, acquiring the current road features and the next variation in terms of slope from the navigation system,
- at step 21, checking that the current or next section has a slope (S≠0),
- if (step 22) checking whether it is a downhill slope (S<0) and
- if (step 23) the travel time Tcond is higher than the preparation time Tprep of the compressor (Tcond>Tprep) then,
- step 24, preparing and starting the compressor
- until (step 25) the current pressure Pa is lower than the maximum pressure Pmax (Pa<Pmax) and until the slope changes (∆S=0), afterwards
- at step 26, stopping the compressor if it is running and exiting,
- if, instead (step 23), the time for starting the compressor is insufficient, exiting to step 26,
- if, instead (step 21), it is not a slope (S=0) and thus is it a flat section, then (step 27) checking if the next road variation includes an uphill slope (S>0), then
- if (step 23) after the flat section, an uphill slope is contemplated and if the travel time of the flat section is longer than the preparation time of the compressor (Tcond>Tprep) then
- going back to step 24, preparing and starting the compressor.

Said second process may be advantageously started also in relation to reaching a predetermined humidity threshold by the drying cartridge of the device for extracting the condensation from the pneumatic braking system.

**Calculating functional parameters for calculating Tbraking and Trem**

In order to calculate Tbraking and Trem, the following physical magnitudes which characterize an event, either individually or together, need to be preliminarily acquired, including:

- variation of Vlim, the speed limit established along i-th road section,
- S slope of the i-th road section,
- R bend radius in the i-th section,
- possibly, friction coefficient $\mu$ between tyres and road surface; for example, this may take the following values:

    o 0.5 if the atmospheric conditions may not be estimated
    o 0.1 in the presence of ice
    o 0.2 in the presence of wet road surface
    o 0.4 in the presence of gravel
    o 0.7 in the presence of dry road surface

and the following magnitudes need to be preliminarily calculated:
- V [ i ] Speed to be reached from when the i-th event occurs to adapt thereto, this may be zero if it is a punctual event, such as a stop, a yield, a traffic light, a queue, etc., which force the vehicle to stop, or may be higher than zero if it is an event the effects of which are protracted over time for a route section L[i], such as a speed limit variation Vlim, a bend which forces to decelerate, etc.,
- D[i] Distance between the vehicle and the next i-th event,
- Vmax[i] Maximum speed reachable before needing to adapt to the i-th event,
- L[i] The length of the route section for which the effects of an event are protracted: it is zero for punctual events (stop) and higher than zero for events which are protracted over time (duration of a speed limit).

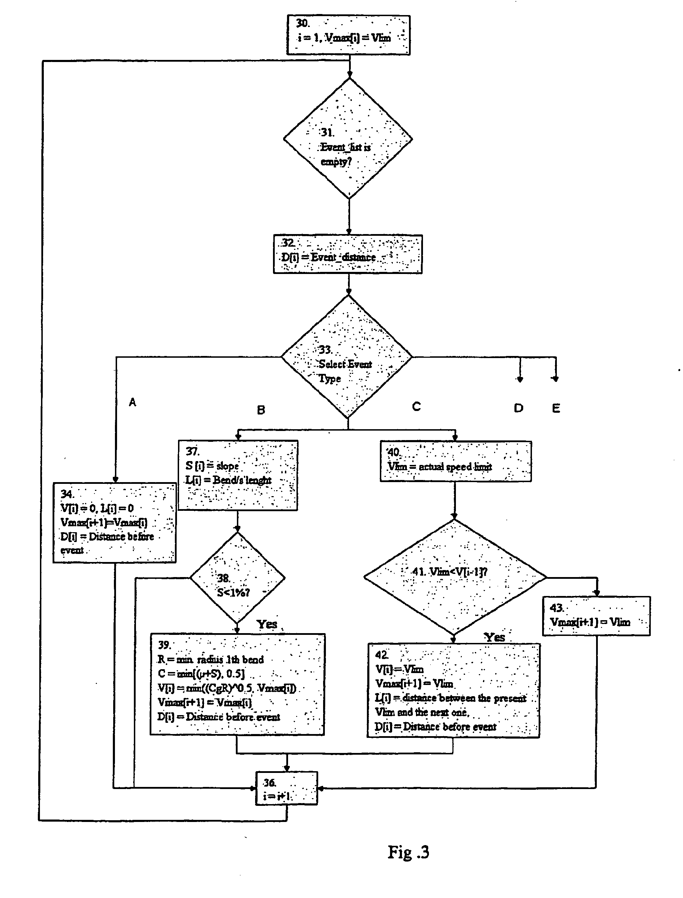

An example of calculating said magnitudes is provided by the chart shown in figure 3 to support a method example.
Said chart supposes that one or more events are sorted in a list sorted over time, from the most imminent to the remotest.
Said chart in figure 3 describes a method comprising the following steps:

- at step 30, initializing Vmax with the current speed limit and ″i″ cycle variable,
- at step 31, selecting the next event, e.g. from said sorted event list, for its features, thus if it is a punctual event, following branch A of the chart and going to step 34; if there are one or more bends, for example, following branch B of the chart and starting from step 37; if it is a variation of speed limit, following branch C of the chart and starting from step 40, etc.,

- if it is a punctual event (step 34), setting the values of V[i] and L[i] equal to zero and D[i] equal to the distance existing before said punctual event and Vmax [i+1] equal to Vmax [i], which may be the established speed limit or a lower limit dictated by the road conditions (bend, ice, etc.),
- then (step 36), increasing i and going back to step 33 for analyzing the next event,
- if it is a bend (step 37), acquiring the slope S, the length L [i] of the road section concerned by the bend(s), then
- step 38, if the slope is less than 1% (or other appropriate value)

    o acquiring the radius R of the first curve
    o selecting the friction coefficient C as the minimum value between 0.5 and $\mu+S$,
    o calculating V [i] as a minimum value between the maximum speed reachable on the previous section and the expression CgR^0.5, where g is gravitational acceleration,
    o setting the value of D [i] equal to the distance existing before said event

- then (step 36), increasing i and going back to step 33 for analyzing the next event,
- if the event is a speed limit variation (step 40), acquiring said limit, then
- step 41, if said limit is lower than the speed to be reached to adapt to the previous event V [i-1] (Vlim<V [i-1] ), then
- step 42, setting the values of:

    o V[i] and Vmax [i] equal to the established limit,
    o L[i] equal to the distance separating the considered limit from the next one
    o D[i] equal to the distance separating the vehicle from the considered limit, then

- step 36, increasing i and going back to step 33 for analyzing the next event,
- if instead said limit is NOT lower than the speed to be reached to adapt to the preceding event V[i-1] (Vlim>=V[i-1]), then set value of Vmax[i+1] equal to Vlim.

Therefore, the preliminary described method which may be modified by including further branches, etc., comprises the following main steps:

- selecting an event,
- determining whether it is a punctual event or not,
- calculating the appropriate speed V[i] for meeting the event type and the maximum speed Vmax[i] which may be reached before said event occurs,
- calculating the distance until the event D[i] occurs,
- calculating the distance over which the effect of said event L[i] is protracted.

**Calculating Trem and Tbraking**

According to the present invention, Tbraking and Trem are calculated by acquiring the parameters C, Vmax[i] and V[i] from the previous method, which parameters are the estimated friction coefficient between tyres and road surface, the maximum speed reachable before the vehicle adapts to the i-th event, and the speed to be reached from the i-th event to adapt thereto, respectively.
Therefore, the method of calculating Tbraking and Trem comprises the following steps:

- at step 50, acquiring values C, Vmax[i], V[i] calculated by the method in figure 3,
- at step 51, calculating the current acceleration A(T) impressed to the vehicle and calculating the minimum deceleration Amin that the vehicle may achieve according to the friction coefficient C (Amin = -C*g, with g=9.81 m/s$^2$),
- then (step 52), if the current acceleration is higher than (A(T)>0), then
- step 53, calculating the average time Ta needed to reach the speed Vmax[i] from the current speed V, calculating the distance Da that the vehicle will travel before reaching said speed Vmax[i], then
- step 55, calculating the time needed to adapt the maximum speed Vmax[i] to the speed V[i] set by the next event, and calculating the corresponding travelled distance Db, then
- step 58, calculating the travel time Tc at constant speed Vmax[i],
- if, instead (step 52), the acceleration A is null or less than zero (A(T)<=0), i.e. it is a deceleration, then
- setting the values of Ta and Da equal to zero and calculating Tb, Db and Tc as at the preceding steps 55 and 58,
- calculating Trem as the sum of the acceleration time Ta plus the time Tc for travelling at constant speed Vmax[i] and calculating Tbraking as the sum of the braking time Tb possibly plus a time equal to the duration time of the i-th event, i.e. equal to the ratio L[i]/V[i].

Several braking events close in time may be considered as a single braking event thus influencing the calculation of Tbraking.

According to the present invention, it is estimated that, independently from the adopted pneumatic system type, a good recharging level of the compressed air tank may be ensured by calculating Tbraking as the braking time Tb plus the duration time of the i-th event, L[i]/V[i]. This allows to limit the number of parallel processes adapted to promote the compressor activation. In particular, it is sensible to calculate said ratio [i]/V[i] when it is a real number, i.e. when it relates to non-punctual events.

**Regenerating the dryer cartridge**

According to another aspect of the invention, the control unit handles the process of regenerating the cartridge for extracting condensation from the pneumatic braking system.

According to the present invention, the control unit handles said regeneration on the basis of information obtained from the navigation system, including

- variation of length, slope, inclination and bending of a road section,
- variation of road type: urban/extra-urban/highway with particular reference to:

    o possible changes of direction,
    o signage, with particular reference to warning signs, signs giving orders, yield signs, prohibition signs and horizontal signage,
    o presence of traffic lights, crossroads, crossings of various nature (pedestrian/rail/cycle lane crossings),

- traffic information, road conditions, weather information.

As previously mentioned, information on traffic and road conditions may be available in various manners, i.e. via DAB (Digital Audio Broadcasting) or via a data/telephone connection such as GPRS, HSDPA, etc.

Weather information may be obtained via DAB or GPRS, or by means of onboard instruments.

As will be described in greater detail below, said control unit may be advantageously connected to the vehicle control unit(s) governing vehicle functions, such as for example the gearbox, particularly if automatic or robotized, the engine, the brakes (e.g. with ABS or EBS system), the hydraulic retarder, the stability control (ESP), the direction indicators, etc.

According to a first variant of a method for controlling the dryer cartridge, it is based on respecting a maximum level Wmax and minimum level Wmin of humidity, but also one the current pressure level Pa, the compressor state, i.e. on or off, the environmental humidity $\varphi$ and Trem (time remaining before starting the braking event). For this purpose, the following table 2 (shown below) defines a look-up table, similar to that shown in figure 1, which allows to fractionate cartridge regeneration according to a priority function, for example:

Table 2

| Wa (Water level) | Action | Wt(target level) | Priority |
|---|---|---|---|
| Wa>Pmax | No regeneration | - | 1 |
| Wh<Wa<Wmax | No regeneration | - | 2 |
| Wl<Wa<Wh | Start rigeneration | Wmax | 3 |
| Wmin<Wa<Wl | Start rigeneration | >Wh | - |
| Wa<Wmin | Start rigeneration | Wh | - |

The thresholds considered in the table may be, for example:

■ Wmax: maximum humidity: 150 g
■ Wh: high humidity (< Wmax): 100 g
■ Wl: low humidity (< Wh): 20 g
■ Wmin: minimum humidity: 10 bars

According to said table, with regards to the humidity degree Wa reached by the dryer cartridge, a priority level is selected, which from maximum to minimum varies from 1 to 3, for example.

A virtual Trem is associated, for example, with said priority value, which is reversely proportional to the degree of humidity reached by the dryer cartridge and a Tbraking equivalent to the air needed for regenerating the cartridge is associated with the regeneration process.

Then, the cartridge regeneration event is inserted into the list of events to be handled according to the method described with the aid of figure 3.

Therefore, a regeneration handling method comprises at least the following steps:

- calculating the compressed air needed for at least partially regenerating the drying device,
- acquiring information related to a route to be travelled,
- calculating a braking system use time (Tbraking) on a section of said route in relation to said information,
- when the current pressure (Pa) of compressed air contained in the accumulation tank is insufficient with regards to said use time (Tbraking) and to said at least partial regeneration of the braking system, then
- activating the compressor, so as to make said current pressure (Pa) reach a target pressure (Pt) which is sufficient to cope with said use time and said at least partial regeneration.

In particular, a further branch, D for example, of the flow chart shown herein may be included, according to which the regeneration is controlled in accordance with said table 2. Indeed, the operation of regenerating the cartridge may be handled as an event in which air is consumed, like a braking event.

Or, the regeneration may be controlled independently from said process of recharging the compressed air tank.

According to table 2, the regeneration may be advantageously fractioned, whereby it be partial until a target humidity Wt is reached, depending on the humidity range in which the current humidity is comprised. Therefore, similarly to the process of recharging the compressed air tank, the process of regenerating the cartridge is appropriately fractioned to prevent penalizing braking system performance because of the drying cartridge regeneration process.

A regeneration fraction may be programmed if the its duration is less than a time equal to the Trem of a next event which requires to employ the braking system, for example. Thereby, the performance of the braking system is not deteriorated.

According to another variant of the invention, the regeneration process is activated in relation to said priority and to the current pressure Pa of the air contained in the braking system tank.

Therefore, in relation to estimating the braking system use, Pt and thus Pa are varied and according to Pa and to the regeneration priority, the regeneration of the drying cartridge is controlled both in terms of regeneration start-up and duration.

A partial regeneration step preferably comprises the following steps

- defining humidity thresholds and corresponding delimited ranges, e.g.:

  - ■ Wmax: maximum humidity: 150 g
  - ■ Wh: high humidity (< Wmax): 100 g
  - ■ Wl: low humidity (< Wh): 20 g
  - ■ Wmin: minimum humidity: 10 bars

- associating numeric values with the actions for controlling the regeneration process:

  0 = Do not regenerate,
  1 = Regenerate,

  one of said values being associated with an ACTION1 parameter, each time;
- calculating said Trem and said Tbraking (which may take real values from 0 to + ∞),
- for each pressure range defined by said pressure thresholds, associating a value 0,1 with said ACTION1 parameter, and a target humidity Wt to be reached (W Target) and an equivalent Trem value.

## Determining the treated air flow rate

The degree of humidity Wa of the dryer cartridge may be directly determined by knowing the flow rate of air treated by the compressor, the time $t_c$ when the compressor is recharging, the temperature thereof and the atmospheric humidity $\varphi$ before intake. Atmospheric temperature and humidity may be obtained by a temperature sensor and a humidity sensor or by means of information received via GPRS or via radio (DAB). At the same time, the flow rate Q of compressed air treated by the compressor, from which said humidity is extracted, may be estimated knowing that an ideally compressed air flow rate Qid results from:

$$Q_{ID} = \frac{\rho_A}{\rho_0} \frac{\Psi n}{1.000}$$

where:

- $\rho_A$ density of the intake air [kg/m3]
- $\rho_0$ density of the air under standard conditions equal to 1.204 kg/m3
- $\Psi$ displacement of the compressor [cm3]
- n speed of the compressor [rpm]

$\eta_v$ defines the compression efficiency, therefore the actually compressed air flow rate is

$$Q = \eta_v \, \dot{Q}id$$

where $\eta_v$ may be obtained from the following expression:

$$\eta_v = 1 - v\left( \beta^{\frac{1}{k}} - 1 \right)$$

where:

- $\beta$ is a compression ratio given by the ratio of the absolute opening pressure of the delivery valve to the absolute opening pressure of the intake valve;
- $v$ is the ratio of the air volume contained in the cylinder when the piston has reached the top dead centre (TDC) to the air volume which is obtained when the cylinder reaches the bottom dead centre (BDC);
- a thermodynamic expansion coefficient k which varies from 1 and 1.4 and depends on the compressor head cooling.

Estimating the condensed humidity in the dryer cartridge on the basis of the treated flow rate

It is a further object of the present invention a method for estimating the humidity extracted from the drying device.

The relative air humidity $\varphi$ may be given by the ratio of the water amount per mixture volume unit Z [g/m$^3$] to the maximum water amount which may be contained at a certain temperature Z' [g/m$^3$] (i.e. under saturation conditions).

By good approximation, air and aqueous vapor may be seen as perfect gases, and therefore Dalton's law may be applied, which substantially asserts that in a container of a given volume, the aqueous vapor behaves as if there is no air, and the same applies to air with regards to vapor.

Therefore, indicating pressures in absolute terms (absolute bars) and using the following annotations:

$P_D$ partial pressure of aqueous vapor;
$P_D'$ partial pressure of saturated aqueous vapor;
$P_L$ partial air pressure;
$P$ total pressure in the container.

Dalton's law may thus be expressed as:

$$p = p_D + p_L \qquad\qquad (1)$$

Therefore, the air pressure $P_L$ (absolute bars) is given by:

$$p_L = p - p_D \qquad\qquad (2)$$

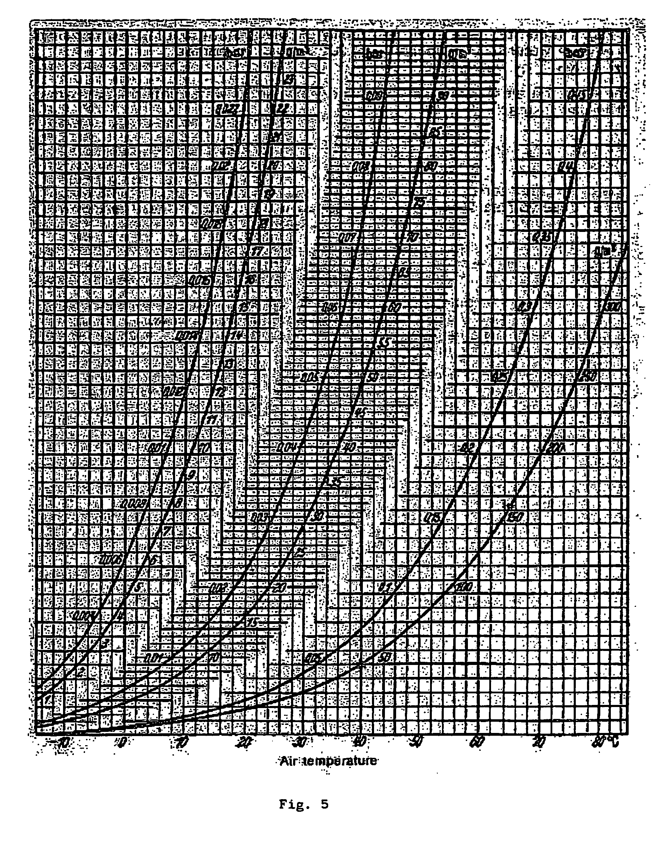

The saturation humidity $Z'$ [g/m$^3$] is according to temperature only, and such a connection may be obtained from experimental psychometric charts, such as Hinz' chart shown in figure 5, which shows the partial vapor pressure and the saturated air humidity.

We will assume that the air to be compressed has relative humidity equal to $\varphi_1$, absolute temperature equal to $T_1$ [K] and pressure $P_1$ [absolute bars].

The saturation humidity $Z_1'$ [g/m$^3$] may be obtained on the basis of the absolute temperature.

Therefore the actual humidity $Z_1$ [g/m$^3$] of the aspirated air mass is:

$$Z_1 = \varphi_1 \, Z_1' \qquad\qquad (3)$$

Given G [kg] the aspirated air mass in the intake volume: this will not vary after compression. Thus considering an aspirated air volume $V_1$ [m$^3$], for the air state equation we have:

$$p_1 \, V_1 = G \, R \, T_1 \qquad\qquad (4)$$

The air amount $Q_1$ [g] contained under intake conditions in the volume $V_1$ is thus:

$$Q_1 = Z_1 \, V_1 \qquad\qquad (5)$$

From this, it is obtained that:

$$GR = \frac{p_1 V_1}{T_1} \qquad\qquad (6)$$

After compression and expansion, the air is at pressure $P_2$ [absolute bars] and temperature $T_2$ [K], to which a saturation humidity $Z_2'$ [g/m$^3$] corresponds, which is obtained from a psychometric chart.

The air mass G is constant before and after compression and is thus:

$$P_2 \, V_2 = G \, R \, T_2 \qquad\qquad (7)$$

Therefore:

$$V_2 = GR \frac{T_2}{p_2} = \frac{T_2}{T_1} \frac{p_1}{p_2} V_1 \qquad\qquad (8)$$

thus obtaining the volume $V_2$ [m$^3$] after compression. Then, the water amount contained after compression $Q_2$ [g] is:

$$Q_2 = Z_2' \, V_2 \qquad\qquad (9)$$

Therefore, the amount of condensed water W [g] due to compression and expansion, absorbing other water in no way, according to (3), (5) and (9) is:

$$W = Q_1 - Q_2 = Z_1 V_1 - Z_2' V_2 = \varphi_1 Z_1' V_1 - Z_2' V_2 \qquad (10)$$

Therefore, by developing (10) with (8):

$$W = \varphi_1 Z_1' V_1 - Z_2' \frac{T_2}{T_1} \frac{p_1}{p_2} V_1 = \left( \varphi_1 Z_1' - Z_2' \frac{T_2}{T_1} \frac{p_1}{p_2} \right) V_1 \qquad (11)$$

is obtained, and the amount of condensed water per volume unit $Z_C$ [g/m$^3$] is thus:

$$Z_C = \frac{W}{V_1} = \varphi_1 Z_1' - Z_2' \frac{T_2}{T_1} \frac{p_1}{p_2} \qquad (12)$$

If air conditions after expansion are such that the temperature may be considered equal to intake temperature, then $T_1 = T_2$ and thus $Z_1' = Z_2'$. Then, in such a case, (11) is simplified as:

$$W = Z_1' \left( \varphi_1 - \frac{p_1}{p_2} \right) V_1 \qquad (13)$$

The amount of condensed water per aspirated air volume unit $Z_C$ [g/m$^3$] is thus:

$$Z_C = \frac{W}{V_1} = Z_1' \left( \varphi_1 - \frac{p_1}{p_2} \right) \qquad (14)$$

Therefore, if the average aspirated air flow rate is F [m$^3$/h], then the condensed water Y [1/h] is:

$$Y = \frac{F Z_c}{1000} \qquad (15)$$

We will assume the air at a temperature $t_1$= 20°C ($T_1$ = 293.15 K) and aspirated at a pressure of 1.01325 absolute bars (atmospheric pressure) under saturation conditions $\varphi_1$ = 1. The air is compressed to 11 relative bars (12.01325 absolute bars) and we will assume that, after expansion, the temperature is equal to intake temperature.
As obtained from the psychometric chart, at the temperature $t_1$ = 20°C, the saturation humidity is $Z_1'$ = 17.4 g/m$^3$ and the saturated vapor pressure is 0.0235 absolute bars.
Intake $P_1$ and compression $P_2$ pressures are thus equal to:

$P_1$ = 1.01325 bars - 0.0235 bars = 0.98975 bars
$P_1$ = 12.01325 bars - 0.0235 bars = 11.98975 bars Then, the amount of condensed water per aspirated air volume unit $Z_C$ [g/m$^3$] according to (14) is thus:

$$Z_C = \frac{W}{V_1} = 17.4\frac{g}{m^3}\left(1 - \frac{0.98975bar}{11.98975bar}\right) = 16.0\frac{g}{m^3} \qquad (16)$$

The humidity contained in 1 $m^3$ under intake conditions is $Q_1$ = 17.4 g, the air being saturated.

The volume occupied by the air mass corresponding to 1 $m^3$ under intake conditions for (8) is:

$$V_2 = \frac{T_2}{T_1}\frac{p_1}{p_2}V_1 = \frac{293.15K}{293.15K}\frac{0.98975bar}{11.98975bar}1m^3 = 0.0825m^3 \qquad (17)$$

Therefore, the amount of water still contained in air $Q_2$ is:

$$Q_2 = 17.4\frac{g}{m^3}\times 0.0825m^3 = 1.4g \qquad (18)$$

Then, the amount of condensed water W is equal to the difference between $Q_1$ and $Q_2$:

$$W = Q_1 - Q_2 = 17.4\ g - 1.4\ g = 16.0\ g \qquad (19)$$

The value obtained with formula (16) is thus represented.

Considering then the amount $Q_2$ obtained with (18), it saturates the compressed air. If it expands at atmospheric pressure, then the air volume reoccupies the 1 $m^3$ volume and, at a temperature of 20°C, the saturation humidity is still 17.4 g/$m^3$.

Therefore, the new relative humidity is:

$$\varphi_2 = \frac{1.4\frac{g}{m^3}}{17.4\frac{g}{m^3}} = 8.05\% \qquad (20)$$

As can be observed in the psychometric chart in figure 5, the value of 1.4 g/$m^3$ reaches saturation at the atmospheric pressure of -14°C, i.e. condensation only occurs for temperatures lower than -14°C.

This means that assuming an *isothermal* expansion of the compressed air at the exhaust, i.e. with infinite heat exchange, there is no condensation phenomena until the ambient temperature reaches the minimum value of -14°C. On the other hand, if polytrophic expansion is considered, at the adiabatic limit, then a temperature lowering is obtained as shown in table 3, on the basis of the valid ratio for critical expansion conditions:

$$T_{exp} = T_{init}\frac{2}{m+1}$$

$$(21)$$

where $T_{exp}$ [K] is the absolute temperature of end of expansion, $T_{init}$ [K] is the absolute temperature of the compressed air in the automatic circuit and m is the polytrophic coefficient of air expansion (1: isothermal; 1.4: adiabatic) which varies in the range 1-1.4, according to the entity of the thermal exchanges of the air during expansion.

Table 3
***Expansion end temperatures***

| °C | Compressed air temperature (°C) | | | | | | | | | | |
|---|---|---|---|---|---|---|---|---|---|---|---|
| **M** | **0** | **5** | **10** | **15** | **20** | **25** | **30** | **35** | **40** | **45** | **50** |
| 1 | 0.0 | 5.0 | 10.0 | 15.0 | 20.0 | 25.0 | 30.0 | 35.0 | 40.0 | 45.0 | 50.0 |
| 1.1 | -13.0 | -8.2 | -3.5 | 1.3 | 6.0 | 10.8 | 15.6 | 20.3 | 25.1 | 29.9 | 34.6 |
| 1.2 | -24.8 | -20.3 | -15.7 | -11.2 | -6.7 | -2.1 | 2.4 | 7.0 | 11.5 | 16.1 | 20.6 |
| 1.3 | -35.6 | -31.3 | -26.9 | -22.6 | -18.2 | -13.9 | -9.5 | -5.2 | -0.8 | 3.5 | 7.9 |
| 1.4 | -45.5 | -41.4 | -37.2 | -33.0 | -28.9 | -24.7 | -20.5 | -.4 | -12.2 | -8.0 | -3.9 |

As can be observed in the chart in figure 5, in the case of isothermal expansion, for example considering a polytrophic expansion with m= 1.3, if the compressed air is initially at the temperature of 20°C, at the end of expansion it will reach the temperature of -18.2°C. At this temperature, condensation actually occurs (which forms under -14°C).

On the other hand, if there is saturated air (100% relative humidity) under intake conditions at a temperature of 5°C and the compressed air temperature is stabilised at about 30°C in the automatic circuit, then the humidity contained in 1 m³ of intake air, as obtained from the psychometric chart, is equal to 7 g/m³ (at 5°C) and 30 g/m³ (at 30°C) and the saturation pressure is equal to 0.009 bars (at 5°C) and 0.041 bars (at 30°C).

Intake $P_1$ and compression $P_2$ pressures are thus equal to:

$P_1$ = 1.01325 bars - 0.009 bars = 1.00425 bars
$P_1$ = 12.01325 bars - 0.041 bars = 11.97225 bars

The volume occupied by the air mass corresponding to 1 m³ under intake conditions, on the basis of (8), is:

$$V_2 = \frac{T_2}{T_1} \frac{p_1}{p_2} V_1 = \frac{303,15K}{278,15K} \frac{1,00425bar}{11,97225bar} 1m^3 = 0,0914m^3 \qquad (22)$$

Therefore, the amount of water still contained in air $Q_2$ is:

$$Q_2 = 30,0 \frac{g}{m^3} \times 0,0914m^3 = 2,7g \qquad (23)$$

The amount of condensed water is thus:

$$W = Q_1 - Q_2 = 7.0 \text{ g} - 2.7 \text{ g} = 4.3 \text{ g} \qquad (24)$$

The amount $Q_2$, as obtained in (23), starts condensing when the temperature is lower than -6°C, as can be observed in the psychometric chart. According to table 3, it can be observed that in a polytrophic expansion with m=1.3, condensation may occur during the last one at final temperature (-9.5°C).

The present invention may be advantageously implemented by means of a computer program which comprises encoding means for implementing one or more steps of the method, when this program is executed on a computer. Therefore the scope of protection is intended to extend to said computer program and also to computer-readable means which comprise a recorded message, said computer-readable means comprising program encoding means for implementing one or more steps of the method, when said program is executed on a computer.

Other possible constructional variants of the described non-limitative example are possible, without therefore departing from the scope of protection of the present invention, comprising all the implementations deemed equivalent by a person skilled in the art.

From the description above, a person skilled in the art will be able to implement the object of the invention without introducing further constructional details.

**Claims**

1. A method of handling the regeneration of a drying device of a pneumatic braking system, in particular for industrial vehicles, comprising an at least partially pneumatic braking system comprising a compressed air accumulation tank, a corresponding compressor and a drying device, the method comprising the following steps of:

   - calculating the compressed air needed for at least partially regenerating the drying device,
   - acquiring information related to a route to be travelled,
   and **characterized by** the following steps of:
   - calculating a braking system use time (Tbraking) on a section of said route in relation to said information,
   - when the current pressure (Pa) of compressed air contained in the accumulation tank is insufficient with regards to said use time (Tbraking) and to said at least partial regeneration of the braking system, then
   - activating the compressor, so as to make said current pressure (Pa) reach a target pressure (Pt) which is sufficient to cope with said use time and said at least partial regeneration.

2. A method according to claim 1, further comprising the following steps:

   - calculating a driving torque (Eth) needed to move the vehicle,

     - when the driving torque (Eth) is lower than a predetermined threshold (Elim) for a sufficient time to make said current pressure (Pa) reach a target pressure (Pt) higher than the current pressure, then

   - activating the compressor.

3. A method according to the preceding claims, further comprising the step of at least partially regenerating the drying device.

4. A method according to the preceding claims, wherein said information related to a route to be travelled comprises:

   - variation of length, slope, inclination and bending of a road section,
   - variation of road type: urban/extra-urban/highway with particular reference to:

     o changes of direction,
     o signage, including warning signs, signs giving orders, yield signs, prohibition signs and horizontal signage,
     o presence of traffic lights, crossroads, crossings of various nature, including pedestrian, rail, cycle lane crossings,

   - traffic information, road conditions, weather information.

5. A method according to the preceding claims, wherein said information is acquired and handled as events and sorted according to the time order according to which the vehicle encounters them along the travelled route, and wherein said calculation of the braking system use time (Tbraking) is calculated for one or more consequential events.

6. A method according to claim 5, wherein the step of at least partially regenerating the dryer is associated with an event comprising:

   - a braking time (Tbraking) corresponding to the air needed for the regeneration process
   - a remaining time (Trem) before needing to start regenerating in relation to a current humidity degree (Wa) in the dryer.

7. A method according to the preceding claims, wherein said step of at least partial regeneration comprises the following steps:

   - defining humidity thresholds and corresponding delimited ranges, e.g.:

     ■ Wmax: maximum humidity
     ■ Wh: high humidity (< Wmax)
     ■ Wl: low humidity < Wh

■ Wmin: minimum humidity

- associating numeric values with the actions for controlling the regeneration process:

    0 = Do not regenerate,
    1 = Regenerate,

one of said values being associated with a parameter (ACTION1), each time;
- calculating said remaining time before the next event (Trem) and said duration time of the event (Tbraking),
- for each pressure range defined by said pressure thresholds, associating a value 0,1 with said parameter (ACTION1), and a target humidity (Wt) to be reached and an equivalent remaining time value (Trem).

8.  A method according to claim 7, wherein the following preliminary steps are carried out to calculate said braking time (Tbraking) and said remaining time (Trem) before the vehicle encounters an event along the route to be travelled:

    - selecting an event,
    - discriminating whether it is a punctual event or not,
    - calculating the appropriate speed V[i] adapted to meet the event type, and the maximum speed Vmax[i] which may be reached before said event occurs,
    - calculating the distance until the event D[i] occurs,
    - calculating the distance over which the effect of said event L[i] is protracted.

9.  A method according to claim 8, for preliminarily calculating said magnitudes V[i], D[i], Vmax[i], L[i] comprising the following steps:

    - (step 30) initializing Vmax with the current speed limit, and a cycle variable i=0,
    - (step 31) selecting the next event, from said sorted event list to define the type of event,
    - if it is a punctual event (step 34), setting the values of V[i] and L[i] equal to zero and D[i] equal to the existing distance before said punctual event and Vmax[i+1] equal to Vmax[i], which may be the established speed limit or a lower limit dictated by the road conditions,
    - then (step 36) increasing i and (step 33) analyzing the next event,
    - if it is a bend (step 37), acquiring the slope S, the length L[i] of the road section concerned by the bend(s), then,
    - (step 38) if the slope is lower than a predetermined percentage value

        o acquiring the radius R of the first curve
        o selecting the friction coefficient C as the minimum value between 0.5 and $\mu$+S,
        o calculating V[i] as a minimum value between the maximum speed reachable on the previous section and the expression CgR^0.5, where g is gravitational acceleration,
        o setting the value of D[i] equal to the distance existing before said event

    - then (step 36) increasing i and (step 33) analyzing the next event,
    - if the event is a speed limit variation (step 40) acquiring said limit, then
    - (step 41) if said limit is lower than the speed to be reached to adapt to the previous event V[i-1] (Vlim<V[i-1]), then
    - (step 42) setting the value of:

        o V[i] and Vmax[i] equal to the speed limit established along said route section,
        o L[i] equal to the distance separating the considered limit from a subsequent speed limit
        o D[i] equal to the distance separating the vehicle from the considered limit, then

    - (step 36) increasing i and (step 33) analyzing the next event,
    - if instead said limit is NOT lower than the speed to be reached to adapt to the preceding event V[i-1] (Vlim>=V[i-1]), then set value of Vmax[i+1] equal to Vlim.

10. A method according to claim 9, wherein calculating said braking time Tbraking and said remaining time Trem before the vehicle encounters an event along the route to be travelled, comprises the following steps:

    - (step 50) acquiring the previously calculated values C, Vmax [i], V[i],
    - (step 51) calculating the current acceleration A(T) impressed to the vehicle and calculating the minimum

16

deceleration Amin that the vehicle may achieve according to the friction coefficient C (Amin = -C*g, with g=9.81 m/s$^2$),
- then (step 52), if the current acceleration is greater than 0 (A(T)>0), then
- (step 53) calculating the average time Ta needed to reach the speed Vmax[i] from the current speed V, calculating the distance Da that the vehicle will travel before reaching each speed Vmax[i], then
- (step 55) calculating the time needed to adapt he maximum speed Vmax[i] to the speed V[i] determined by the next event and calculating the corresponding travelled distance Db, then
- (step 58) calculating the travel time Tc at constant speed Vmax[i],
- if instead (step 52), acceleration A is null or less than zero (A(T)<=0), i.e. it is a deceleration, then
- setting the values of Ta and Da equal to zero and calculating Tb, Db and Tc as at the preceding steps (55 and 58),
- thus Ta, Da, Tb, Db, Tc, being known (step 59), calculating Trem as a sum of the acceleration time Ta plus the travel time Tc at constant speed Vmax[i] and calculating Tbraking as the sum of the braking time Tb plus a time equal to the duration time of the i-th event (L[i]/V[i]).

11. A device for handling the regeneration of a drying device of a pneumatic braking system, in particular for industrial vehicles, the braking system being at least partially pneumatic and comprising a compressed air accumulation tank, a corresponding compressor and a regeneration device, the handling device comprising interface means adapted to interface with a vehicle navigation system **characterised by** means adapted to carry out the steps according to claims from 1 to 10.

12. A device according to claim 11, further comprising second interface means adapted to interface with a DAB device and/or with a data connection and/or onboard sensors and/or a vehicle control unit for governing at least one vehicle function.

13. A computer program comprising program encoding means adapted to implement the steps in claims from 1 to 10, when said program is executed on a computer.

14. Computer-readable means comprising a stored program, said computer-readable means comprising program encoding means adapted to implement the steps of claims from 1 to 10, when said program is executed on a computer.


**Patentansprüche**

1. Verfahren zur Steuerung der Regenerierung einer Trocknereinheit eines pneumatischen Bremssystems, insbesondere für Nutzfahrzeuge, umfassend ein zumindest teilweise pneumatisches Bremssystem umfassend einen Druckluftspeichertank, einen entsprechenden Kompressor und eine Trocknereinheit, wobei das Verfahren die folgenden Schritte umfasst:

- Berechnen der Druckluft, die zur zumindest teilweisen Regenerierung der Trocknereinheit erforderlich ist,
- Erfassen von Informationen bezüglich einer zu fahrenden Route,

und **gekennzeichnet durch** die folgenden Schritte:

- Berechnen einer Bremssystembenutzungszeit (Tbraking) auf einem Abschnitt der Route bezogen auf die Informationen,
- wenn der derzeitige Druck (Pa) der Druckluft enthalten im Speichertank unzureichend ist in Bezug auf die Benutzungszeit (Tbraking) und in Bezug auf die zumindest teilweise Regenerierung des Bremssystems, dann
- Aktivieren des Kompressors, um den derzeitigen Druck (Pa) dazu zu bringen, einen Zieldruck (Pt) zu erreichen, der ausreichend ist, um mit der Benutzungszeit und der zumindest teilweisen Regenerierung fertig zu werden.

2. Verfahren nach Anspruch 1, weiter umfassend die folgenden Schritte:

- Berechnen eines Antriebsdrehmoments (Eth), das erforderlich ist, um das Fahrzeug zu bewegen,
- wenn das Antriebsdrehmoment (Eth) niedriger ist als ein vorbestimmter Schwellenwert (Elim) für eine ausreichende Zeit, um den derzeitigen Druck (Pa) dazu zu bringen, einen Zieldruck (Pt) zu erreichen, der höher ist als der derzeitige Druck, dann
- Aktivieren des Kompressors.

3. Verfahren nach den vorhergehenden Ansprüchen, weiter umfassend den Schritt der zumindest teilweisen Regenerierung der Trocknereinheit.

4. Verfahren nach den vorhergehenden Ansprüchen, wobei die Informationen bezüglich einer zu fahrenden Route umfassen:

- Änderung der Länge, Steigung, Neigung und Biegung eines Straßenabschnitts,
- Änderung der Straßenart: innerorts / ausserorts / Fernstraße mit besonderem Bezug zu:

○ Änderungen der Richtung,
○ Beschilderung, einschließlich Warnschilder, Schilder die Anweisungen geben, Vorfahrtsschilder, Verbotsschilder und horizontale Beschilderung,
○ Vorhandensein von Ampeln, Kreuzungen, Kreuzungen verschiedener Art, einschließlich Fußgänger-, Schienen-, Radwegkreuzungen,

- Verkehrsinformationen, Straßenzustände, Wetterinformationen.

5. Verfahren nach den vorhergehenden Ansprüchen, wobei die Informationen als Ereignisse erfasst und gehandhabt werden und nach der zeitlichen Reihenfolge geordnet werden, nach der ihnen das Fahrzeug entlang der zurückgelegten Route begegnet, und wobei die Berechnung der Bremssystembenutzungszeit (Tbraking) für ein oder mehrere daraus folgende Ereignisse berechnet ist.

6. Verfahren nach Anspruch 5, wobei der Schritt des zumindest teilweisen Regenerierens des Trockners mit einem Ereignis verbunden ist, umfassend:

- eine Bremszeit (Tbraking) entsprechend der für den Regenerierungsprozess erforderlichen Luft;
- eine verbleibende Zeit (Trem) bevor es erforderlich ist, das Regenerieren bezüglich eines derzeitigen Feuchtegrads (Wa) in dem Trockner zu starten.

7. Verfahren nach den vorhergehenden Ansprüchen, wobei der Schritt des zumindest teilweisen Regenerierens die folgenden Schritte umfasst:

- Definieren von Feuchtigkeitsschwellenwerten und entsprechenden begrenzten Bereichen, z.B.:

■ Wmax: maximale Feuchtigkeit
■ Wh: hohe Feuchtigkeit (< Wmax)
■ WI: niedrige Feuchtigkeit < Wh
■ Wmin: minimale Feuchtigkeit

- Zuordnen numerischer Werte zu den Handlungen zum Steuern des Regenerierungsprozesses:

0 = nicht regenerieren,
1 = regenerieren,

wobei jedes Mal einer der Werte mit einem Parameter (ACTION1) verbunden ist;

- Berechnen der verbleibenden Zeit vor dem nächsten Ereignis (Trem) und der Zeitdauer des Ereignisses (Tbraking),
- für jeden Druckbereich, der durch die Druckschwellenwerte definiert ist, Zuordnen eines Werts 0, 1 zu dem Parameter (ACTION1), und einer Zielfeuchtigkeit (Wt), die zu erreichen ist, und eines entsprechenden verbleibenden Zeitwerts (Trem).

8. Verfahren nach Anspruch 7, wobei die folgenden vorausgehenden Schritte ausgeführt werden, um die Bremszeit (Tbraking) und die verbleibende Zeit (Trem) zu berechnen, bevor das Fahrzeug einem Ereignis entlang der zu fahrenden Route begegnet:

- Auswählen eines Ereignisses,
- Unterscheiden, ob es ein punktuelles Ereignis ist oder nicht,

- Berechnen der angemessenen Geschwindigkeit V[i], die geeignet ist, um der Art des Ereignisses gerecht zu werden, und der maximalen Geschwindigkeit Vmax[i], die erreicht werden kann, bevor das Ereignis eintritt,
- Berechnen der Entfernung bis das Ereignis D[i] eintritt,
- Berechnen der Entfernung über welche sich der Effekt des Ereignisses L[i] hinzieht.

9. Verfahren nach Anspruch 8, zum vorausgehenden Berechnen der Größen V[i], D[i], Vmax[i], L[i], umfassend die folgenden Schritte:

- (Schritt 30) Initialisieren von Vmax mit der derzeitigen Geschwindigkeitsbegrenzung und einer Zyklus-Variablen i=0,
- (Schritt 31) Auswählen des nächsten Ereignisses von der geordneten Ereignisliste, um die Art des Ereignisses zu definieren,
- falls es ein punktuelles Ereignis ist (Schritt 34), Setzen der Werte von V[i] und L[i] gleich Null und D[i] gleich der existierenden Entfernung vor dem punktuellen Ereignis und Vmax[i+1] gleich Vmax[i], das die festgelegte Geschwindigkeitsbegrenzung sein kann oder eine niedrigere Begrenzung vorgeschrieben durch die Straßenbedingungen,
- dann (Schritt 36) Erhöhen von i und (Schritt 33) Analysieren des nächsten Ereignisses,
- falls es eine Kurve ist (Schritt 37), Erfassen der Steigung S, der Länge L[i] des Straßenabschnitts, der durch die Kurve(n) betroffen ist, dann,
- (Schritt 38) falls die Steigung niedriger ist als ein vorbestimmter Prozentwert

  o Erfassen des Radius R der ersten Kurve
  o Auswählen des Reibungskoeffizienten C als den minimalen Wert zwischen 0.5 und μ+S,
  o Berechnen von V[i] als einen minimalen Wert zwischen der maximalen Geschwindigkeit erreichbar auf dem vorhergehenden Abschnitt und dem Ausdruck CgR^0.5, wo g die Erdbeschleunigung ist,
  o Setzen des Werts von D[i] gleich der Entfernung, die vor dem Ereignis existiert,

- dann (Schritt 36) Erhöhen von i und (Schritt 33) Analysieren des nächsten Ereignisses,
- falls das Ereignis eine Geschwindigkeitsbegrenzungsänderung ist (Schritt 40) Erfassen der Begrenzung, dann
- (Schritt 41) falls die Begrenzung niedriger ist als die Geschwindigkeit, die erreicht werden soll, um sich dem vorherigen Ereignis anzugleichen V[i-1] (Vlim < V[i-1]), dann
- (Schritt 42) Setzen des Werts von:

  ○ V[i] und Vmax[i] gleich der Geschwindigkeitsbegrenzung, die entlang des Abschnitts der Route festgelegt ist,
  ○ L[i] gleich der Entfernung, die die betrachtete Begrenzung von einer nachfolgenden Geschwindigkeitsbegrenzung trennt,
  ○ D[i] gleich der Entfernung, die das Fahrzeug von der betrachteten Begrenzung trennt, dann

- (Schritt 36) Erhöhen von i und (Schritt 33) Analysieren des nächsten Ereignisses,
- falls stattdessen die Begrenzung NICHT niedriger als die zu erreichende Geschwindigkeit ist, um sich dem vorherigen Ereignis anzugleichen V[i-1] (Vlim >= V[i-1]), dann Setzen des Werts von Vmax[i+1] gleich Vlim.

10. Verfahren nach Anspruch 9, wobei das Berechnen der Bremszeit Tbraking und der verbleibenden Zeit Trem, bevor das Fahrzeug einem Ereignis entlang der zu fahrenden Route begegnet, die folgenden Schritte umfasst:

- (Schritt 50) Erfassen der vorher berechneten Werte C, Vmax[i], V[i],
- (Schritt 51) Berechnen der derzeitigen Beschleunigung A(T), die auf das Fahrzeug einwirkt, und Berechnen der minimalen Verzögerung Amin, die das Fahrzeug nach dem Reibungskoeffizienten C (Amin = -C*g, mit g = 9.81 m/s²) erreichen kann,
- dann (Schritt 52), falls die derzeitige Beschleunigung größer ist als 0 (A(T)>0), dann
- (Schritt 53) Berechnen der durchschnittlichen Zeit Ta, die erforderlich ist, um die Geschwindigkeit Vmax[i] von der derzeitigen Geschwindigkeit V zu erreichen, Berechnen der Entfernung Da, die das Fahrzeug zurücklegen wird, vor dem Erreichen jeder Geschwindigkeit Vmax[i], dann
- (Schritt 55) Berechnen der Zeit, die erforderlich ist, um die maximale Geschwindigkeit Vmax[i] an die Geschwindigkeit V[i] anzupassen, die durch das nächste Ereignis bestimmt wird, und Berechnen der entsprechenden gefahrenen Entfernung Db, dann
- (Schritt 58) Berechnen der Fahrzeit Tc bei konstanter Geschwindigkeit Vmax[i],

- falls stattdessen (Schritt 52), Beschleunigung A Null ist oder weniger als Null (A(T)<=0), d.h. es ist eine Verzögerung, dann
- Setzen der Werte von Ta und Da gleich Null und Berechnen von Tb, Db und Tc wie bei den vorhergehenden Schritten (55 und 58),
- demnach sind Ta, Da, Tb, Db, Tc bekannt (Schritt 59), Berechnen von Trem als eine Summe der Beschleunigungszeit Ta plus der Fahrzeit Tc bei konstanter Geschwindigkeit Vmax[i] und Berechnen von Tbraking als die Summe der Bremszeit Tb plus einer Zeit gleich der Zeitdauer des i-ten Ereignisses (L[i]/V[i]).

**11.** Vorrichtung zur Steuerung der Regenerierung einer Trocknereinheit eines pneumatischen Bremssystems, insbesondere für Nutzfahrzeuge, wobei das Bremssystem zumindest teilweise pneumatisch ist und einen Druckluftspeichertank, einen entsprechenden Kompressor und eine Regenerierungsvorrichtung umfasst, wobei die Steuervorrichtung Schnittstellenmittel geeignet zum Verbinden mit einem Fahrzeugnavigationssystem umfasst, **gekennzeichnet durch** Mittel geeignet zum Ausführen der Schritte nach den Ansprüchen 1 bis 10.

**12.** Vorrichtung nach Anspruch 11, weiter umfassend zweite Schnittstellenmittel geeignet zum Verbinden mit einer DAB-Vorrichtung und/oder mit einer Datenverbindung und/oder fahrzeugeigenen Sensoren (onboard sensors) und/oder einer Fahrzeugsteuereinheit zum Steuern mindestens einer Fahrzeugfunktion.

**13.** Computerprogramm umfassend Programmkodierungsmittel, die geeignet sind, um die Schritte in den Ansprüchen 1 bis 10 auszuführen, wenn das Programm auf einem Computer ausgeführt wird.

**14.** Computerlesbare Mittel umfassend ein gespeichertes Programm, wobei die computerlesbaren Mittel Programmkodierungsmittel umfassen, die geeignet sind, um die Schritte der Ansprüche 1 bis 10 auszuführen, wenn das Programm auf einem Computer ausgeführt wird.


**Revendications**

**1.** Procédé de gestion de la régénération d'un dispositif de séchage d'un système de freinage pneumatique, en particulier pour des véhicules industriels, comprenant un système de freinage au moins partiellement pneumatique comprenant un réservoir d'accumulation d'air comprimé, un compresseur correspondant et un dispositif de séchage, le dispositif comprenant les étapes suivantes consistant à :

- calculer les besoins en air comprimé pour régénérer au moins partiellement le dispositif de séchage,
- acquérir des informations concernant un itinéraire à emprunter,

et **caractérisé par** les étapes suivantes consistant à :

- calculer un temps d'utilisation de système de freinage (Tbraking) sur une section dudit itinéraire en fonction desdites informations,
- lorsque la pression actuelle (Pa) d'air comprimé contenu dans le réservoir d'accumulation est insuffisante par rapport audit temps d'utilisation (Tbraking) et à ladite régénération au moins partielle du système de freinage, alors
- activer le compresseur, de façon à ce que ladite pression actuelle (Pa) atteigne une pression cible (Pt) qui est suffisante pour faire face audit temps d'utilisation et à ladite régénération au moins partielle.

**2.** Procédé selon la revendication 1, comprenant en outre les étapes suivantes :

- calculer un couple d'entraînement (Eth) nécessaire pour déplacer le véhicule,
- lorsque le couple d'entraînement (Eth) est inférieur à un seuil prédéterminé (Elim) assez longtemps pour que ladite pression actuelle (Pa) atteigne une pression cible (Pt) supérieure à la pression actuelle, puis
- activer le compresseur.

**3.** Procédé selon les revendications précédentes, comprenant en outre l'étape consistant à régénérer au moins partiellement le dispositif de séchage.

**4.** Procédé selon les revendications précédentes, dans lequel lesdites informations concernant un itinéraire à emprunter comprennent :

- une variation de la longueur, de la pente, de l'inclinaison et des virages d'une section de route,
- une variation du type de route, urbaine/périurbaine/autoroutière, en faisant particulièrement référence à :
- des changements de direction,
- la signalisation, y compris des panneaux de danger, des panneaux d'obligation, des panneaux « céder le passage », des panneaux d'interdiction et une signalisation horizontale,
- la présence de feux tricolores, d'intersections, de croisements de diverses natures, y compris des passages piéton, de voie ferrée, de piste cyclable,
- des informations sur le trafic, l'état de la route, des informations météorologiques.

5. Procédé selon les revendications précédentes, dans lequel lesdites informations sont acquises et gérées en tant qu'évènements et triées selon l'ordre chronologique dans lequel le véhicule les rencontre le long de l'itinéraire emprunté, et dans lequel ledit calcul du temps d'utilisation de système de freinage (Tbraking) est réalisé pour un ou plusieurs évènements consécutifs.

6. Procédé selon la revendication 5, dans lequel l'étape consistant à régénérer au moins partiellement le sécheur est associée à un évènement comprenant :

- un temps de freinage (Tbraking) correspondant à l'air nécessaire pour le processus de régénération
- un temps restant (Trem) avant qu'il soit nécessaire de démarrer la régénération en fonction d'un degré d'humidité actuel (Wa) dans le sécheur.

7. Procédé selon les revendications précédentes, dans lequel ladite étape consistant en au moins la partielle régénération comprend les sous-étapes suivantes :

- définir des seuils d'humidité et des plages délimitées correspondantes, par exemple :
- Wmax : humidité maximale
- Wh : humidité élevée (< Wmax)
- Wl : humidité faible < Wh
- Wmin : humidité minimale
- associer des valeurs numériques aux actions afin de commander le processus de régénération :

0 = Ne pas régénérer,
1 = Régénérer,

l'une desdites valeurs étant associée à un paramètre (ACTION1), à chaque fois ;

- calculer ledit temps restant avant l'évènement suivant (Trem) et ledit temps de durée de l'évènement (Tbraking),
- pour chaque plage de pression définie par lesdits seuils de pression, associer une valeur 0,1 audit paramètre (ACTION1), et une humidité cible (Wt) à atteindre et une valeur de temps restant (Trem) équivalente.

8. Procédé selon la revendication 7, dans lequel les étapes préliminaires suivantes sont réalisées pour calculer ledit temps de freinage (Tbraking) et ledit temps restant (Trem) avant que le véhicule ne rencontre un évènement le long de l'itinéraire à emprunter :

- sélectionner un évènement,
- déterminer s'il s'agit d'un évènement ponctuel ou non,
- calculer la vitesse appropriée V[i] adaptée pour répondre au type d'évènement, et la vitesse maximale Vmax[i] qui peut être atteinte avant que ledit évènement ait lieu,
- calculer la distance jusqu'à ce que l'évènement D[i] ait lieu,
- calculer la distance sur laquelle l'effet dudit évènement L[i] est prolongé.

9. Procédé selon la revendication 8, destiné à calculer de façon préliminaire lesdites grandeurs V[i], D[i], Vmax[i], L[i] comprenant les étapes suivantes :

- (étape 30) initialiser Vmax à la limite de vitesse actuelle, et une variable de cycle i = 0,
- (étape 31) sélectionner l'évènement suivant, à partir de ladite liste d'évènement triée afin de définir le type d'évènement,
- s'il s'agit d'un évènement ponctuel (étape 34), fixer les valeurs de V[i] et L[i] égales à zéro et D[i] égale à la distance existante avant ledit évènement ponctuel et Vmax[i + 1] égale à Vmax[i], qui peut être la limite de vitesse établie ou une limite inférieure dictée par l'état de la route,

- puis (étape 36) augmenter i et (étape 33) analyser l'évènement suivant,
- s'il s'agit d'un virage (étape 37), acquérir la pente P, la longueur L[i] de la section de route concernée par le (s) virage(s), puis,
- (étape 38) si la pente est inférieure à une valeur de pourcentage prédéterminée
- acquérir le rayon R du premier virage
- sélectionner le coefficient de frottement C en tant que valeur minimale entre 0,5 et $\mu$ + S,
- calculer V[i] en tant que valeur minimale entre la vitesse maximale pouvant être atteinte sur la section précédente et l'expression CgR^0,5, où g est l'accélération gravitationnelle,
- fixer la valeur de D[i] égale à la distance existant avant ledit évènement
- puis (étape 36) augmenter i et (étape 33) analyser l'évènement suivant,
- si l'évènement est une variation de limite de vitesse (étape 40), acquérir ladite limite, puis
- (étape 41) si ladite limite est inférieure à la vitesse à atteindre pour s'adapter à l'évènement précédent V[i - 1] (Vlim < V[i - 1]), puis
- (étape 42) fixer la valeur de :
- V[i] et Vmax[i] égales à la limite de vitesse établie le long de ladite section de route,
- L[i] égale à la distance séparant la limite prise en considération d'une limite de vitesse suivante
- D[i] égale à la distance séparant le véhicule de la limite prise en considération, puis
- (étape 36) augmenter i et (étape 33) analyser l'évènement suivant,
- si au contraire ladite limite n'est pas inférieure à la vitesse à atteindre pour s'adapter à l'évènement précédent V[i] - 1] (Vlim >= V[i - 1]), alors fixer la valeur de Vmax[i + 1] égale à Vlim.

10. Procédé selon la revendication 9, dans lequel le calcul dudit temps de freinage Tbraking et dudit temps restant Trem avant que le véhicule ne rencontre un évènement le long de l'itinéraire à emprunter, comprend les étapes suivantes :

- (étape 50) acquérir les valeurs précédemment calculées C, Vmax[i], V[i],
- (étape 51) calculer l'accélération actuelle A(T) appliquée au véhicule et calculer la décélération minimale Amin que le véhicule peut atteindre selon le coefficient de frottement C (Amin = -C*g, avec g = 9, 81 m/s$^2$),
- puis (étape 52), si l'accélération actuelle est supérieure à 0 (A(T) > 0), alors
- (étape 53) calculer le temps moyen Ta nécessaire pour atteindre la vitesse Vmax[i] depuis la vitesse actuelle V, calculer la distance Da que le véhicule parcourra avant d'atteindre chaque vitesse Vmax[i], puis
- (étape 55) calculer le temps nécessaire pour adapter la vitesse maximale Vmax[i] à la vitesse V[i] déterminée par l'évènement suivant et calculer la distance parcourue correspondante Db, puis
- (étape 58) calculer le temps de parcours Tc à une vitesse constante Vmax[i],
- si au contraire (étape 52), l'accélération A est nulle ou inférieure à zéro (A(T) <= 0), c'est-à-dire qu'il s'agit d'une décélération, alors
- fixer les valeurs de Ta et Da égales à zéro et calculer Tb, Db et Tc comme aux étapes précédentes (55 et 58),
- puis Ta, Da, Tb, Db, Tc étant connus (étape 59), calculer Trem comme une somme du temps d'accélération Ta plus le temps de parcours Tc à vitesse constante Vmax[i] et calculer Tbraking comme la somme du temps de freinage Tb plus un temps égal au temps de durée du i-ème évènement (L[i] / V[i]).

11. Dispositif de gestion de la régénération d'un dispositif de séchage d'un système de freinage pneumatique, en particulier pour des véhicules industriels, le système de freinage étant au moins partiellement pneumatique et comprenant un réservoir d'accumulation d'air comprimé, un compresseur correspondant et un dispositif de régénération, le dispositif de gestion comprenant un moyen d'interface adapté pour réaliser l'interface avec un système de navigation de véhicule et **caractérisé par** un moyen adapté pour réaliser les étapes selon les revendications 1 à 10.

12. Dispositif selon la revendication 11, comprenant en outre un second moyen d'interface adapté pour réaliser l'interface avec un dispositif de radiodiffusion numérique et/ou avec une connexion de données et/ou des capteurs embarqués et/ou une unité de commande de véhicule afin de gouverner au moins une fonction de véhicule.

13. Programme informatique comprenant un moyen de codage de programme adapté pour implémenter les étapes des revendications 1 à 10, lorsque ledit programme est exécuté sur un ordinateur.

14. Moyen lisible par ordinateur comprenant un programme stocké, ledit moyen lisible par ordinateur comprenant un moyen de codage de programme adapté pour implémenter les étapes des revendications 1 à 10, lorsque ledit programme est exécuté sur un ordinateur.

```
┌─────────────────────────┐
│           1.            │
│  PMin, PMax, Pl, Ph,    │
└─────────────────────────┘
             │
             ▼
┌─────────────────────────┐
│           2.            │
│         ACTION          │
└─────────────────────────┘
             │
             ▼
┌─────────────────────────┐
│           3.            │
│    Trem, Tbraking       │
└─────────────────────────┘
             │
             ▼
┌─────────────────────────┐
│           4.            │
│      Associations       │
└─────────────────────────┘
             │
             ▼
┌─────────────────────────┐
│           5.            │
│     Look up table       │
└─────────────────────────┘
             │
             ▼
     ◇ 6. Action ? ◇ ─── 0 ──→ ┌──────────────┐
   1                            │      7.      │
                                │  STOP - EXIT │
             │ 2                └──────────────┘
             ▼
┌─────────────────────────┐
│  8. Prepare compressor  │
└─────────────────────────┘
             │
             ▼
       ◇ 9.Trem=0? ◇ ────→ ┌──────────────┐
                           │   10. Wait   │
             │ Yes         └──────────────┘
             ▼
┌─────────────────────────┐
│  11. START compressor   │
└─────────────────────────┘
             │
             ▼
          ◇  12.   ◇
          ◇ Pa ≥ Pt? ◇
          ◇ Et < Elim ◇
             │ Yes
```

$$Pa \geq Pt?$$
$$Et < Elim$$

Fig .1

Fig .2

Fig .3

26

50. Acquisition:
C, Vmax[i], V[i], L[i], L[i]

51.
A(T), Amin(C)

52.
A(T)>0?

Yes

NO

53. Vref = Vmax[i]

56. Vref = V

54. Ta = (Vref-V)/a
Da = 0.5*A(T)*Ta^2

57. Ta = 0, Da = 0

55.
Tb = - (Vref – V[i]) / Amin
Db = - 0.5*Amin*Tb^2

58. Tc=(D[i]-Da-Db)/Vref

59.
Trem = Ta + Tc
Tbraking = Tb + (L[i] / V[i])

Fig .4

Fig. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2009010199 A1